# EUROPEAN PATENT SPECIFICATION

(11) **EP 2 502 508 B1**
(45) Date of publication and mention of the grant of the patent: **15.08.2018**
(21) Application number: 10831498.0
(22) Date of filing: 10.11.2010
(51) Int. Cl.: B01F 3/04, A23L 2/54, B01F 5/06, C12G 1/06, C12G 3/00, C12G 3/04, C12C 11/11

(54) **METHOD FOR PRODUCING CARBONATED BEVERAGE**
VERFAHREN ZUR HERSTELLUNG EINES KOHLENSÄUREHALTIGEN GETRÄNKS
PROCÉDÉ DE PRODUCTION D'UNE BOISSON GAZEUSE

(30) Priority: 18.11.2009 JP 2009262592
(43) Date of publication of application: 26.09.2012
(73) Proprietor: Suntory Holdings Limited, Osaka-shi, Osaka 530-8203 (JP); Aura Tec Co., Ltd., Kurume-shi Fukuoka 830-0047 (JP)
(72) Inventor: MATSUOKA, Yuki, Kawasaki-shi Kanagawa 211-0067 (JP); SATOU, Hajime, Mishima-gun Osaka 618-0001 (JP); HASHIMOTO, Takuya, Kawasaki-shi Kanagawa 211-0067 (JP); ANDO, Noriyuki, Kawasaki-shi Kanagawa 211-0067 (JP); MATSUBARA, Hitoshi, Osaka 618-0001 (JP); EGUCHI, Toshihiko, Kurume-shi Fukuoka 830-0047 (JP)
(74) Representative: Vossius & Partner Patentanwälte Rechtsanwälte mbB
(86) International application number: PCT/JP2010/070030
(87) International publication number: WO 2011/062103

(56) References cited:
- WO-A1-01/36105
- WO-A1-2009/054481
- DE-B- 1 268 483
- FR-A- 942 608
- GB-A- 1 063 753
- GB-A- 1 588 624
- JP-A- 2007 301 561
- JP-A- 2008 296 096
- US-A- 3 522 055
- US-A- 5 029 733

## Description

### TECHNICAL FIELD

The present invention relates to so-called carbonated beverages represented by carbonated water and shochu- or distilled spirit-based carbonated beverages and to a method for producing the same. In particular, the present invention relates to carbonated beverages characterized by retaining their sparkling characteristic for many minutes and bringing the feeling of fine and delicate bubbles in drinking and to a method for producing the carbonated beverages.

### BACKGROUND ART

A typical current process for industrially producing packaged carbonated beverages includes a step of mixing a beverage and carbon dioxide in piping by using a special mixer represented by a carbonator available from Tuchenhagen GmbH (for example, see Patent Document 1). Other processes for producing carbonated beverages include spraying a beverage in a tank filled with carbon dioxide, thereby applying the beverage to plural plates placed in the tank to form thin films of the beverage on the plates where the thin films absorb carbon dioxide efficiently (Patent Document 2). While these typical processes have been conventionally used, carbonated beverages obtained thereby have disadvantages of large bubbles of carbon dioxide dissolved therein, such a strong sparkling characteristic as to cause slight pains in the mouth and throat, and rapid release of the carbon dioxide. GB 1063753 discloses a process for generating finer bubbles in a beverage dispensing process using a constriction of flow with a perforated disc with uniform orifice size.

US3522055 discloses a process for preparing a carbonated drink where cavitation is produced in the carbonated liquid using a vibration horn to produce finer carbon dioxide bubbles in the beverage.

Meanwhile, drinking collected and packaged natural spring water, i.e., mineral water, has taken root in Europe from old times. Since the mineral water is spring water that gushes out from the deep inside of the ground, it contains natural carbon dioxide and has an inherent quality such as smoothness; actually, it has a wide variety of qualities.

Sparkling wines as represented by those produced in Champagne in France and Cava in Spain are produced by a means of trapping carbon dioxide in bottles during secondary fermentation. These sparkling wines have been noted for superior qualities of carbon dioxide dissolved therein, particularly for the fine bubbles and long retention time of the carbon dioxide.

It has been desirable to develop a method for industrial production of a carbonated beverage having such fine bubbles and a smooth taste and exhibiting a long retention time of carbon dioxide dissolved therein. The present applicant has extensively investigated such a method and consequently developed a method for providing carbon dioxide to a liquid for beverage by using a means to produce the fine bubbles of carbon dioxide in a pressure container (Patent Document 3). Carbonated beverages produced thereby have superior advantages of having finer bubbles and a longer retention time of carbon dioxide gas and bringing moderate sparkling feeling, as compared with any carbonated beverage produced with a conventional carbonator. However, the method disclosed in Patent Document 3 tends to require a somewhat long time to provide a liquid for beverage with high-concentration carbon dioxide gas.

### CITATION LIST

### PATENT DOCUMENTS

Patent Document 1: Japanese Patent Domestic Publication No. 7-509181
Patent Document 2: Japanese Examined Patent Application Publication No. 8-2415
Patent Document 3: Japanese Unexamined Patent Application Publication No. 2009-100705

### SUMMARY OF INVENTION

### TECHNICAL PROBLEMS

Accordingly, an object of the present invention is to develop a new method to enable a relatively short-time production of carbonated beverages which are less likely to release carbon dioxide dissolved therein, bring the feeling of finer bubbles in drinking, and have a totally new quality that allows a full control of their sparkling characteristic, as compared with any carbonated beverage produced with a conventional carbonator.

### SOLUTION TO PROBLEMS

As a result of an extensive investigation, the present inventors developed a new method to enable the production of carbonated beverages containing fine bubbles, on the basis of an idea completely different from the ideas of the conventional techniques, and accomplished the present invention. In particular, the method is directed to generating cavitation under pressure conditions, in a beverage incorporating carbon dioxide gas in advance or in a beverage containing natural carbon dioxide gas, thereby making finer the bubbles of the carbon dioxide gas dissolved in the beverage.

Specifically, the present invention includes the following aspects:
(1) A method for producing carbonated beverages, the method comprising generating cavitation in a liquid containing carbon dioxide gas present under pressure conditions by passing the liquid through an apparatus to generate cavitation, wherein the apparatus to generate cavitation is a micro/nano bubble generator, and wherein the micro/nano bubble generator has a flow channel for the pressurized liquid having at least one step portion which makes the diameter of the channel increased discontinuously toward the downstream side, and whereby the generation of cavitation is done using said flow channel.
(2) The method according to aspect (1), wherein the cavitation produces bubbles having a diameter of less than 1 mm.
(3) The method according to any of aspects (1) to (2), wherein the micro/nano bubble generator has a plurality of flow channels for the pressurized liquid, at least two of which are arranged to be linked to a common space at the downstream outlets of the channels.
(4) The method according to any of aspects (1) to (3), wherein the flow channel for the pressurized liquid in the micro/nano bubble generator has an inner wall having a jagged portion with its ridges biased toward the downstream side.
(5) The method according to any of aspects (1) to (4), wherein the carbon dioxide dissolved in the carbonated beverages has a level of 200 to 12000 ppm.

### ADVANTAGEOUS EFFECTS OF INVENTION

The present invention enables a relatively short-time production of carbonated beverages that are highly capable of retaining carbon dioxide dissolved therein and have fine bubbles and qualities which are totally different from those of any carbonated beverage produced with a conventional carbonator or the like.

### BRIEF DESCRIPTION OF DRAWINGS

Fig. 1 shows one example of the processes for generating cavitation.
Fig. 2 shows one example of the forms of the inner wall of a nozzle which generates cavitation.
Fig. 3 is a schematic view showing a process for producing the inventive carbonated beverage.
Fig. 4 is a graph showing the changes in the residual ratios of carbon dioxide gas contained in the beverages obtained by the inventive method and the beverage of a comparative example.

### DESCRIPTION OF EMBODIMENTS

The present invention is directed to generating cavitation in a liquid containing carbon dioxide gas under pressure conditions to thereby make finer the bubbles of the carbon dioxide gas dissolved in the beverage.

In the present invention, a carbonated beverage or a beverage or liquid which contains carbon dioxide gas means a beverage containing carbon dioxide originally produced by fermentation and the like (beer, etc.) or a beverage incorporating carbon dioxide artificially at any of the stages in its production process (carbonated water, carbon dioxide-containing soft drinks and alcoholic beverages, etc.) The concentration of carbon dioxide gas in the inventive carbonated beverage (i.e., carbon dioxide) is not particularly limited. It may be a concentration in a common carbonated beverage, typically about 200-12000 ppm, more preferably about 2500-7500 ppm.

A method which is commonly known to a person skilled in the art can be used to produce a liquid incorporating carbon dioxide gas artificially. For example, the method may include, but is not limited to, dissolving carbon dioxide in a liquid under pressure, mixing a liquid and carbon dioxide in piping by using a mixer such as a carbonator available from Tuchenhagen GmbH, spraying a liquid in a tank filled with carbon dioxide to thereby make the carbon dioxide absorbed in the liquid, and mixing a liquid for beverage and carbonated water to obtain a carbonated beverage. The liquid incorporating carbon dioxide gas is not particularly limited as long as it is suitable for drinking. Examples of the liquid used include natural water and processed water containing ingredients such as a sweetener, acidulant, flavor, and alcohol. Also usable liquids are alcohols such as whisky, shochu (distilled spirit), other spirits, wine, and beer, and intermediate materials thereof.

In the present invention, a liquid containing carbon dioxide gas originally or a liquid incorporating carbon dioxide gas artificially is first placed under pressure conditions. The conditions may include, but are not particularly limited to, a pressure enough to prevent the release of carbon dioxide gas dissolved in the liquid. For example, a common pressure used for storage of carbonated beverages and the like can be applied, preferably about 0.1-0.5 MPa, more preferably about 0.1-0.4 MPa.

The liquid placed under pressure is subsequently passed through an apparatus to generate cavitation. Cavitation is a phenomenon in which a factor such as differences in the flow rate of a flowing liquid by location results in reduced pressure at local spots, where the dissolved gas instantaneously comes out as fine bubbles. In the present invention, cavitation is generated in a liquid containing carbon dioxide gas to produce the fine bubbles of the gas temporarily. The fine bubbles are shorn by a vortex of the liquid and become finer. They are again dissolved in the liquid under pressure. Repeating this process makes finer the bubbles of the carbon dioxide dissolved in the liquid, and disperses them finely and homogenously.

Examples of the apparatus to generate cavitation which can be used without any particular restriction include micro/nano bubble generators which can use a gas-containing liquid to make the bubbles contained therein finer, and gas bubble breaking nozzles which produce micro- or nano-bubbles on the principle of cavitation, as disclosed in patent documents such as Japanese Unexamined Patent Application Publication Nos. 2008-161829, 2007-301561, and 2005-204951.

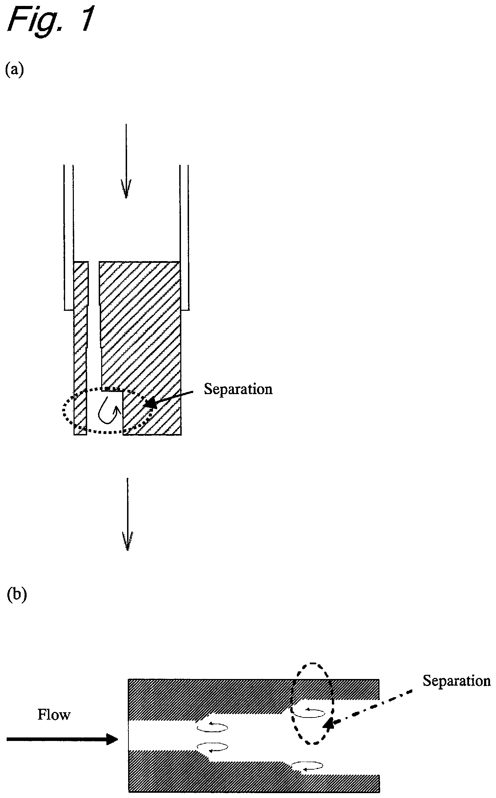

An example of the apparatus to generate cavitation in a liquid containing carbon dioxide gas is a gas bubble breaking nozzle as disclosed in Japanese Unexamined Patent Application Publication No. 2007-301561, but is not limited thereto. The nozzle disclosed in Japanese Unexamined Patent Application Publication No. 2007-301561 has a flow channel for the liquid having such a form that the diameter of the channel increases discontinuously toward the downstream. The generation of cavitation using the nozzle in which the diameter of the flow channel therein increases discontinuously is shown schematically in Figs. 1(a) and 1(b). In the drawings, the shaded areas indicate nozzle walls and the blank areas indicate flow channels. The flow channel has such a form that its diameter increases discontinuously (steps). The liquid flows in the direction of the arrow. The enlarged portions in the flow channel (steps) may be provided perpendicularly to the flow, as illustrated by Fig. 1(a), or enlarged portions having gradients may be provided as illustrated by Fig. 1(b). When the liquid passes through such a flow channel having a discontinuously increasing diameter, velocity distribution is produced in the direction perpendicular to the flow and a separation phenomenon occurs by a disturbed flow. The separation zone is locally lower in pressure and this provides dissolved gas bubbles temporarily (a generation of cavitation). The emerged gas bubbles are made finer by a vortex resulting from change in the flow path.

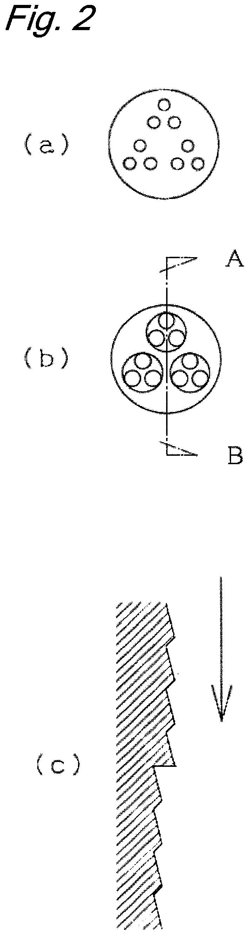

The nozzle may have a plurality of flow channels, and the channels are preferably arranged to be linked to a common space at the downstream outlets of the channels, because the arrangement promotes the generation of finer gas bubbles. The examples of the flow channels are shown in Figs. 2(a) and 2(b). Fig. 2(a) is a drawing of the flow channels viewed from the upstream side, and Fig. 2(b) is the same viewed from the downstream side. The nine flow channels represented by the nine small circles in Fig. 2(a) are divided into three groups and each member thereof is linked to any of three spaces (three middle-level circles) at the downstream side (Fig. 2(b)). To each of the three spaces (middle-level circles), three flow channels (small circles) are linked. Fig. 1 is a longitudinal sectional view of the nozzle illustrated by Fig. 2(b) cut along the A-B plane.

Further, in the nozzle which can be used in the present invention, the flow channels may have inner walls having jagged portions with their ridges biased toward the downstream side. An example of the jagged portion is shown in Fig. 2(c). In Fig. 2(c), the arrow indicates the flow direction of the liquid. The jagged portion promotes the generation of finer gas bubbles.

Figs. 1 and 2 show one example of the gas bubble breaking nozzles (micro/nano bubble generators) that can be used in the present invention, and the form, number, and locations of the flow channels and the form of the jagged portion, the number of its ridges, and the like can be appropriately changed as needed.

Cavitation may be generated in a liquid containing carbon dioxide gas by use of the micro/nano bubble generator or gas bubble breaking nozzle as described above. The bubbles produced in the liquid by cavitation preferably have a diameter of less than 1 mm.

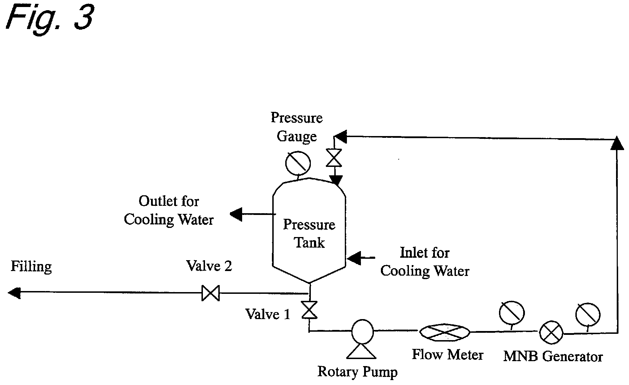

The production process for the invented carbonated beverage is shown schematically in Fig. 3. First, valves 1 and 2 are closed, and then a pressure tank is filled with a liquid containing carbon dioxide gas by a known means (not shown). The pressure produced in a pressure tank is adjusted to a common pressure used for storage of carbonated beverages, for example, about 0.1-0.5 MPa, more preferably about 0.1-0.4 MPa. Next, the valve 1 is opened and a rotary pump is put into operation to circulate the liquid containing carbon dioxide gas from the pressure tank to a micro/nano bubble (MNB) generator. A cavitation phenomenon caused in the MNB generator results in temporary emersion of the fine bubbles of the carbon dioxide gas dissolved in the liquid, and then the emerged bubbles are made finer by a vortex of the liquid and dissolved in the liquid again under pressure. The liquid passing through the MNB generator is returned to the pressure tank. The circulation from the pressure tank through the MNB generator to the pressure tank is repeated several times, which enables the generation of the finer bubbles of the carbon dioxide gas dissolved in the liquid. When the production of the finer bubbles is completed, the valve 1 is closed and the valve 2 is opened to feed the resulting carbonated beverage from the pressure tank to a storage container (not shown).

The flow volume or flow rate of the circulating liquid which contains carbon dioxide gas can be appropriately set depending on the type of an intended carbonated beverage, the volume of gas dissolved therein, the type of an MNB generator used, the control of the sparkling characteristic by adjusting the frequency of circulations, and the like. The flow volume or flow rate can be measured by a flow meter placed on the circulation route.

The pressure tank may have a means for adjusting the temperature of the liquid containing carbon dioxide gas, such as a cooling jacket or a heat-exchanger. Fig. 3 shows an example of cooling the outer periphery of the pressure tank with cold water. The temperature of the liquid can be appropriately set; yet since the lower temperature of a liquid results in the higher solubility of carbon dioxide gas dissolved therein, it is generally preferable to cool the liquid to about 1-5ºC, preferably about 1-2ºC, throughout the steps in the inventive method.

Fig. 3 shows one example of the apparatus used to carry out the inventive production method, but carrying out the method is not limited to the use of the apparatus. Fig. 3 also shows one example of the numbers and locations of the pressure gauges, flow meters, valves, rotary pumps, and the like, and they can be appropriately changed as needed.

The carbonated beverage produced by the inventive method may be packaged in a common package for carbonated beverages, such as aluminum can, steel can, PET bottle, or glass bottle, to obtain a packaged beverage. Alternatively, household or business beverage server may be used to supply the carbonated beverage to consumers.

The carbonated beverage obtained by the inventive method is characterized by very fine bubbles and a smooth taste. The carbonated beverage contains gas bubbles having a size as seen just after a container such as an aluminum can is opened and the beverage therein is poured into a glass, preferably 1 mm or below, more preferably 500 µm or below. The size of bubbles can be measured, for example with a high-speed camera. The inventive carbonated beverage is also characterized by being likely to retain fine bubbles even in several seconds after poured into a glass. For example, most of bubbles in the beverage preferably maintains its diameter of about 1 mm or below, even in 15 seconds after poured into a glass under an open condition.

Further, the carbonated beverage produced by the inventive method is characterized in that the volume of loss of carbon dioxide gas from the beverage allowed to stand still in the open system is lower than the volume from any carbonated beverage produced with a conventional carbonator or the like. For example, when the carbonated beverage produced by the inventive method having a level of dissolved carbon dioxide of 3600 ppm is allowed to stand still at 20ºC for 30 minutes, the residual ratio of the dissolved carbon dioxide is preferably 0.55 or above. The residual ratio can be calculated in accordance with the procedure described in the Examples shown below (Measurement of Temporal Changes in Dissolved Carbon Dioxide).

Furthermore, the inventive method is directed to making finer the bubbles of carbon dioxide gas in a liquid containing the gas in advance. Thus, the method has an advantage of being capable of producing carbonated beverages containing fine bubbles in a shorter time than the method of Patent Document 3 in which carbon dioxide gas is made finer and simultaneously blown into a liquid. This is advantageous especially in producing carbonated beverages which contain a high concentration of carbon dioxide gas. Moreover, the inventive method can be applied to making finer the bubbles of liquids which originally contain carbon dioxide gas (beer, etc.) In addition, the inventive method can control the fineness of bubbles and the sparkling characteristic of beverages by changing the frequency of circulations to the apparatus to generate cavitation.

### EXAMPLES

The present invention will be more specifically described below with reference to examples, but is not limited thereto.

### [Example 1]

A carbonated beverage was produced with the apparatuses illustrated by Fig. 3.

### (i) Preparation of Liquid Containing Carbon Dioxide Gas

Ion-exchange water and carbon dioxide were fed to an apparatus having in-line three static mixers (Noritake Co., Ltd.) (flow volume of ion-exchange water: 8 L/min; flow volume of carbon dioxide: 20 L/min) to produce 10 L of a liquid containing carbon dioxide gas (carbonated water). The gas pressure of the obtained carbonated water was 0.2 MPa (level of carbon dioxide gas: 3600 ppm; temperature: 20ºC).

### (ii) Generation of Finer Bubbles of Carbon Dioxide Gas

Next, a cylindrical pressure tank having a cooling jacket (volume of content: 20 L; height: 42 cm; diameter: 24 cm; pressure applied: 0.1 MPa (at a liquid temperature of 2ºC)) was filled with 10 L of the liquid containing carbon dioxide gas, and cooling water was circulated to the cooling jacket to cool the liquid to a temperature of 2ºC or below. After cooling, a rotary pump was put into operation to circulate the liquid from the pressure tank to a micro/nano bubble generator (flow volume: 18 L/min) to make finer the bubbles of the carbon dioxide gas contained in the liquid. The micro/nano bubble generator used was a nozzle (AURA TEC, Co., Ltd.) having a plurality of flow channels which were linked toa common space at the downstream outlets, where each of the flow channels had steps which made the diameter of the channel increased discontinuously as well as a jagged portion with its ridges biased toward the downstream side, on the inner wall of the channel, as disclosed in Japanese Unexamined Patent Application Publication No. 2007-301561. After a 40-minute circulation, the operation of the rotary pump was stopped. The resulting carbonated water was bottled up in a 200 mL glass bottle under maintained pressure.

### [Example 2]

The same procedure as in Example 1 was repeated, except for the change in circulation time of 40 minutes to 10 minutes.

### [Comparative Example 1]

A carbonated beverage was produced in accordance with a common method for producing carbonated beverages (a method where the finer bubbles of carbon dioxide are not generated).

Ion-exchange water and carbon dioxide were fed to an apparatus having in-line three static mixers (Noritake Co., Ltd.) (flow volume of ion-exchange water: 8 L/min; flow volume of carbon dioxide: 20 L/min) to produce 10 L of a liquid containing carbon dioxide gas (carbonated water). The gas pressure of the obtained carbonated water was 0.2 MPa (level of carbon dioxide gas: 3600 ppm; temperature: 20ºC). The carbonated water was bottled up in a 200 mL glass bottle under maintained pressure.

### [Evaluations]

### (1) Measurement of Temporal Changes in Dissolved Carbon Dioxide

The glass bottles each containing the carbonated water produced in Example 1 or 2 or Comparative Example 1 were immersed in a thermostatic bath at 20ºC for 1 hour to maintain the carbonated waters at 20ºC. Each of the glass bottles was then opened, and 50 mL of the carbonated water was decanted therefrom into a plastic cup (cylindrical shape; mouth diameter of cup: 50 mm).

At a point when the carbonated water was decanted into the cup (0 min) and in 2, 4, 8, 16, and 30 minutes, 2.8 mL of the carbonated water was collected from the cup with a pipette, and decanted into a Falcon tube containing 0.2 mL of 25M aqueous sodium hydroxide (prepared from 12g of sodium hydroxide and 50 mL of ultra-pure water). The tube was then shaken gently twice. The carbon dioxide dissolved in the carbonated water was thereby converted into Na₂CO₃ and NaHCO₃.

Next, 10 µL of the resulting solution was introduced to an HPLC system under the conditions stated below. Na₂CO₃ and NaHCO₃ were converted into H₂CO₃ and the volume of H₂CO₃ was measured.

### <Conditions for HPLC>

Equipment: Organic acid analysis system from Shimadzu Corp.
Column: SPR-H (product name) from Shimadzu Corp.
Column temperature: 40ºC
Run time: 18 minutes
Mobile phase: 4 mM aqueous solution of p-toluenesulfonic acid
Buffer: Mixed solution of a 4 mM aqueous solution of p-toluenesulfonic acid and a 16 mM aqueous solution of Bis-Tris containing 100 µM of EDTA
Flow rate of mobile phase: 0.8 mL/min
Flow rate of buffer: 0.8 mL/min
Detector: Conductometric detector

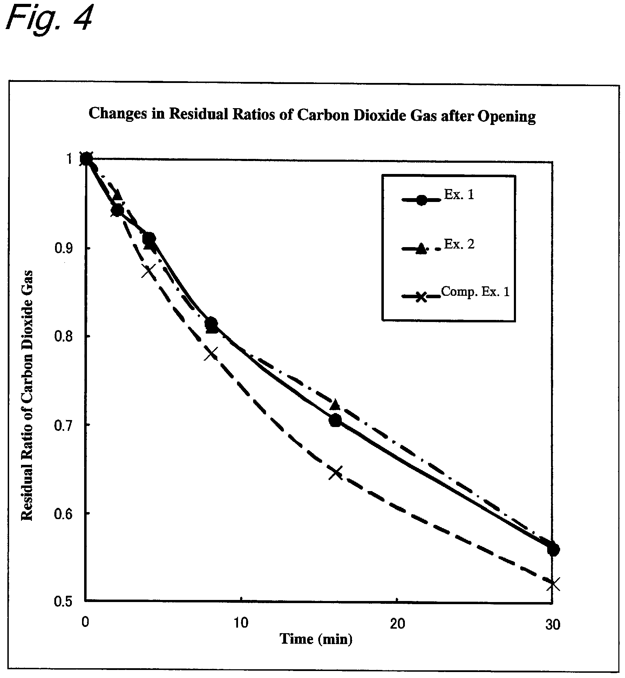

The carbon dioxide dissolved in the carbonated water was indirectly quantified under these conditions. The quantification was carried out using a calibration curve prepared in advance by employing sodium hydrogen carbonate aqueous solutions having concentrations of 0, 1000, 2000, 4000, 6000, and 8000 ppm. Three measurements were carried out for each of the samples and the average values thereof were calculated. In each of the references for Examples 1 and 2 and Comparative Example 1, the volume of the dissolved carbon dioxide at the time of decantation (0 min) was set to be 1, and the residual ratios of the carbon dioxide at 2, 4, 8, 16, and 30 minutes were calculated. The results are shown in Fig. 4.

As shown by Fig. 4, the carbonated beverages produced by the inventive method (Examples 1 and 2) contained more dissolved carbon dioxide even after a certain period of time than the carbon beverage produced with a conventional mixer (Comparative Example 1). Namely, the carbonated beverages produced by the inventive method were found to be less likely to release carbon dioxide gas dissolved therein and also found to have a superior capability of retaining the carbon dioxide gas, as compared with a carbon beverage produced with a conventional mixer. In addition, the inventive processes (Examples 1 and 2) achieved a relatively short-time production of carbonated beverages containing fine bubbles.

### (2) Sensory Evaluation

A sensory evaluation was performed for the carbonated waters produced in Example 1 and Comparative Example 1. The results are shown in Table 1. In conclusion, the inventive method can produce carbonated beverages containing fine bubbles and retaining its sparkling characteristic for many minutes.

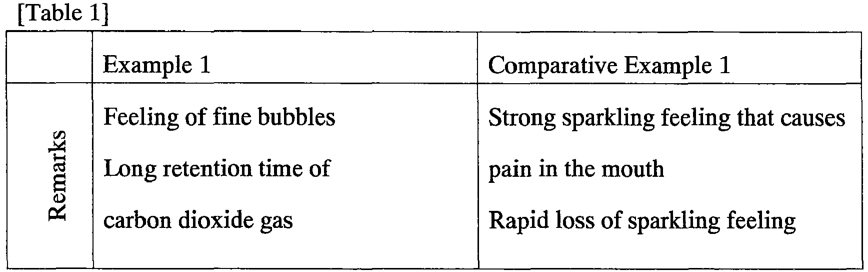

## Claims

1. A method for producing carbonated beverages, the method comprising generating cavitation in a liquid containing carbon dioxide gas present under pressure conditions by passing the liquid through an apparatus to generate cavitation, wherein the apparatus to generate cavitation is a micro/nano bubble generator, and wherein the micro/nano bubble generator has a flow channel for the pressurized liquid having at least one step portion which makes the diameter of the channel increased discontinuously toward the downstream side, whereby the generation of cavitation is done by using said flow channel.

2. The method according to Claim 1, wherein the cavitation produces bubbles having a diameter of less than 1 mm.

3. The method according to any of Claims 1 to 2, wherein the micro/nano bubble generator has a plurality of flow channels for the pressurized liquid, at least two of which are arranged to be linked to a common space at the downstream outlets of the channels.

4. The method according to any of Claims 1 to 3, wherein the flow channel for the pressurized liquid in the micro/nano bubble generator has an inner wall having a jagged portion with its ridges biased toward the downstream side.

5. The method according to any of Claims 1 to 4, wherein the carbon dioxide dissolved in the carbonated beverages has a level of 200 to 12000 ppm.

6. The method according to any of Claims 1 to 5, wherein the liquid containing carbon dioxide gas is circulated to the micro/nano bubble generator.

## Patentansprüche

1. Verfahren zum Erzeugen kohlensäurehaltiger Getränke, wobei das Verfahren das Erzeugen von Kavitation in einer Flüssigkeit aufweist, die unter Druck stehendes Kohlendioxidgas enthält, indem die Flüssigkeit durch eine Vorrichtung zum Erzeugen von Kavitation geleitet wird, wobei die Vorrichtung zum Erzeugen von Kavitation ein Mikro-/Nanoblasengenerator ist, und wobei der Mikro-/Nanoblasengenerator einen Strömungskanal für die unter Druck stehende Flüssigkeit aufweist, der mindestens einen Stufenabschnitt aufweist, der veranlasst, dass der Durchmesser des Kanals in Richtung zur Stromabwärtsseite diskontinuierlich zunimmt, wobei die Kavitation unter Verwendung des Strömungskanals erzeugt wird.

2. Verfahren nach Anspruch 1, wobei die Kavitation Blasen mit einem Durchmesser von weniger als 1 mm erzeugt.

3. Verfahren nach Anspruch 1 oder 2, wobei der Mikro-/Nanoblasengenerator mehrere Strömungskanäle für die unter Druck stehende Flüssigkeit aufweist, von denen mindestens zwei derart angeordnet sind, dass sie mit einem gemeinsamen Raum an den stromabwärtsseitigen Auslässen der Kanäle verbunden sind.

4. Verfahren nach einem der Ansprüche 1 bis 3,
wobei der Strömungskanal für die unter Druck stehende Flüssigkeit im Mikro-/Nanoblasengenerator eine Innenwand mit einem gezackten Abschnitt aufweist, dessen Kämme an der Stromabwärtsseite eine steilere Flanke haben.

5. Verfahren nach einem der Ansprüche 1 bis 4, wobei das in den kohlensäurehaltigen Getränken gelöste Kohlendioxid einen Anteil von 200 bis 12000 ppm hat.

6. Verfahren nach einem der Ansprüche 1 bis 5,
wobei die Kohlendioxidgas enthaltende Flüssigkeit im Mikro-/Nanoblasengenerator umgewälzt wird.

## Revendications

1. Procédé de production de boissons gazeuses, le procédé comprenant la génération de cavitation dans un liquide contenant du gaz de dioxyde de carbone présent dans des conditions de pression par passage du liquide à travers un appareil pour générer une cavitation, l'appareil pour générer une cavitation étant un générateur de micro/nanobulles, et dans lequel le générateur de micro/nanobulles comporte un canal d'écoulement pour le liquide sous pression comportant au moins une partie de gradin qui amène le diamètre du canal à augmenter de façon discontinue vers le côté aval, dans lequel la génération de cavitation est effectuée au moyen dudit canal d'écoulement.

2. Procédé selon la revendication 1, dans lequel la cavitation produit des bulles ayant un diamètre inférieur à 1 mm.

3. Procédé selon l'une quelconque des revendications 1 à 2, dans lequel le générateur de micro/nanobulles comporte une pluralité de canaux d'écoulement pour le liquide sous pression, dont au moins deux sont agencés de façon à être reliés à un espace commun au niveau des sorties en aval des canaux.

4. Procédé selon l'une quelconque des revendications 1 à 3, dans lequel le canal d'écoulement pour le liquide sous pression dans le générateur de micro/nanobulles comporte une paroi interne ayant une partie dentelée avec ses arêtes sollicitées vers le côté aval.

5. Procédé selon l'une quelconque des revendications 1 à 4, dans lequel le dioxyde de carbone dissous dans les boissons gazeuses a un taux de 200 à 12000 ppm.

6. Procédé selon l'une quelconque des revendications 1 à 5, dans lequel le liquide contenant du gaz de dioxyde de carbone est mis en circulation dans le générateur de micro/nanobulles.
